# EUROPEAN PATENT SPECIFICATION

(11) **EP 3 609 605 B1**
(45) Date of publication and mention of the grant of the patent: **01.12.2021**
(21) Application number: 18720897.0
(22) Date of filing: 09.04.2018
(51) Int. Cl.: B01D 53/14, B01D 53/48, B01D 53/02, B01J 20/02, B01J 20/10, B01J 20/32, C02F 1/28

(54) **METHOD OF MAKING SULFIDE SCAVENGING NANOPARTICLES**
VERFAHREN ZUR HERSTELLUNG VON SULFID-ABFANGENDEN NANOPARTIKELN
MÉTHODE DE PRÉPARATION DE NANOPARTICULES ÉLIMINANT LES SULFURES

(30) Priority: 10.04.2017 US 201762483548 P
(43) Date of publication of application: 19.02.2020
(73) Proprietor: Ecolab USA, Inc., St. Paul, Minnesota 55102 (US)
(72) Inventor: SOMMESE, Anthony G., Wheaton, Illinois 60189 (US); MURRAY, Patrick G., Yorkville, Illinois 60560 (US); BATLLO, Francois, Burr Ridge, Illinois 60527 (US); TATAUROVA, Yulia, SAINT PAUL, MN 55102 (US); MILLER, Thomas M., Aurora, Illinois 60506 (US)
(74) Representative: Godemeyer Blum Lenze Patentanwälte Partnerschaft mbB - werkpatent
(86) International application number: PCT/US2018/026667
(87) International publication number: WO 2018/191144

(56) References cited:
- EP-A1- 1 775 018
- US-A- 4 613 454
- US-A- 5 439 867
- US-A1- 2014 209 510
- FAEZE TARI ET AL: "Modified and systematic synthesis of zinc oxide-silica composite nanoparticles with optimum surface area as a proper H 2 S sorbent", CANADIAN JOURNAL OF CHEMICAL ENGINEERING, vol. 95, no. 4, 16 November 2016 (2016-11-16), pages 737-743, XP055484807, US, CA ISSN: 0008-4034, DOI: 10.1002/cjce.22697

## Description

### TECHNICAL FIELD

The present invention relates to a method of preparing sulfide scavenging nanoparticles.

### BACKGROUND

The removal of sulfur-based species from liquid or gaseous hydrocarbon streams continues to be a problem in many industries. Hydrogen sulfide is an undesirable contaminant in the oil industry, particularly in the drilling, production, transportation, storage, and processing of crude oil, as well as wastewater associated with crude oil. The same problems exist in the natural gas industry and geothermal power plants.

The presence of sulfur-containing compounds, such as hydrogen sulfide, can result in the deposition of sulfur containing salts that causes plugging and corrosion of transmission pipes, valves, regulators and other process equipment. Even flared natural gas needs to be treated to avoid acid rain generation due to SOₓ formation. Also, in the manufactured gas industry or coke making industry, coal-gas emissions containing unacceptable levels of hydrogen sulfide are commonly produced from destructive distillation of bituminous coal.

Since hydrogen sulfide has an offensive odor and natural gas containing it is called "sour" gas, treatments to lower hydrogen sulfide are termed "sweetening" processes. When a particular compound is used to remove or lower H₂S, it is called scavenging agent or scavenger.

Besides the industrial setting, hydrogen sulfide is also found in persons with halitosis. Bad breath is often associated with hydrogen sulfide producing bacteria found in the oral cavity.

The scientific publication of Faeze Tari et al., "Modified and systematic synthesis of zinc oxide-silica composite nanoparticle with optimium surface area as a proper H2S sorbent", Canadian Journal of Chemical Engineering, vol. 95, no. 4, p. 737-743, discloses H2S adsorption tests in order to compare the adsorption capacity of the composite nanoparticels with the same composition but different surface areas. The results indicated that addition of ZnO on the bare silica nanoparticles increased the adsorption capacity toward hydrogen sulphide from 3 to 13 mg_{S}·g_{Sorbent}⁻¹.

### BRIEF SUMMARY

In some aspects disclosed herein, but not according to the invention, sulfide scavenging nanoparticles are disclosed. The particles include a colloidal nanoparticle substrate consisting of silica or alumina, the colloidal substrate coated with a sulfide-reacting metal selected from Fe²⁺ and Zn²⁺, where the nanoparticles have a particle size range of from 5-250 nm. In some embodiments, the sulfide-reacting metal is zinc. In some embodiments, the substrate is silica.

The present invention relates to a method of preparing sulfide scavenging nanoparticles as defined in claim 1.

The method includes adding a metallic salt selected from Fe²⁺ and Zn²⁺ salts to an aqueous solution; cationically deionizing colloidal nanoparticles consisting of silica or alumina; adding the deionized colloidal nanoparticles to the aqueous solution; agitating the aqueous mixture containing metallic salt and colloidal nanoparticles; and increasing the pH of the aqueous solution to between 10 and 12 over a time interval of less than 1 hour using potassium hydroxide and removing sulfide scavenging nanoparticles from the solution.

In some embodiments, the metallic salt is added to the aqueous solution prior to adding the colloidal nanoparticles. In some embodiments, the metallic salt is a Zn²⁺ salt. In some embodiments, the metallic salt is selected from zinc nitrate, zinc sulfate, zinc phosphate, zinc nitrite, zinc sulfite, zinc phosphite, zinc hydrogen sulfate, zinc carbonate, zinc azide, zinc hypochlorite, zinc permanganate, zinc hydroxide, zinc chlorite, zinc oxalate, zinc chromate, zinc chlorate, zinc acetate, zinc dichromate, zinc perchlorate, zinc peroxide, and zinc cyanide.

In some embodiments, the method also includes agitating the aqueous mixture containing metallic salt and the nanoparticles for 1 hour. In some embodiments, the colloidal nanoparticles consist of silica coated with Fe²⁺ or Zn²⁺. In some embodiments, the colloidal nanoparticles consist of alumina coated with Fe²⁺ and Zn²⁺.

Not according to the invention, a method of sweetening a fluid is disclosed. The method includes treating a fluid with sulfide scavenging nanoparticles disclosed herein or prepared by the methods disclosed herein. Optionally, the method includes adding one or more additional components, each component independently selected from the group consisting of asphaltene inhibitors, paraffin inhibitors, corrosion inhibitors, scale inhibitors, emulsifiers, water clarifiers, dispersants, emulsion breakers, gas hydrate inhibitors, biocides, pH modifiers, surfactants, dispersant, solvents, and combinations thereof.

Optionally, the fluid is produced from or used in a petroleum extraction process, coal-fired process, natural gas-fired process, a waste-water process, a farm, a slaughter house, a land-fill, a municipality waste-water plant, a sugar plant, a coking coal process, or a biofuel process.

Not according to the invention, a method of sweetening water contaminated with sulfide is disclosed. The method includes providing the sulfide scavenging nanoparticles disclosed herein and contacting the sulfide scavenging nanoparticle with sour water, wherein the sulfide scavenging nanoparticle reacts with sulfide in the sour water resulting in a sulfide bearing nanoparticle. Optionally, the method also includes removing the sulfide bearing nanoparticle. In some embodiments, removal of the sulfide bearing nanoparticle is carried out by settling out the nanoparticles.

Also not according to the invention, the present disclosure also provides the use of a sulfide scavenging nanoparticle in a method of scavenging hydrogen sulfide, the sulfide scavenging nanoparticle comprising a colloidal nanoparticle substrate consisting of silica or alumina, the colloidal substrate coated with a sulfide-reacting metal selected from Fe²⁺ and Zn²⁺, where the nanoparticles have a particle size range of from 5-250 nm.

### BRIEF DESCRIPTION OF THE FIGURES

Figure 1 shows sulfide concentrations measured in an assay using various embodiments of the invention.
Figure 2 shows sulfide concentrations measured in an assay using various embodiments of the invention.

### DETAILED DESCRIPTION

Disclosed herein are hydrogen sulfide and/or mercaptan scavenging and antifouling compositions, methods of using those compositions, and processes for their preparation. However, only the method of preparing sulfide scavenging nanoparticles is in accordance to the invention. The products themselves and their uses discussed in the following are not according to the invention.

The compositions are useful in the control of hydrogen sulfide and/or mercaptan emissions from crude oil based, natural gas based, and coal based products and processes. The compositions are particularly useful in preventing solid deposits in process equipment used for scavenging hydrogen sulfide and/or mercaptan chemicals. The compositions are applicable to both upstream and downstream processes. The scavenging compositions, optionally blended with aqueous and/or non-aqueous solvents, are useful in a wide range of climates and under a wide range of process conditions.

The compositions may also be used in more traditional consumer health settings such as in oral health care in the form of toothpastes and mouthwashes.

The disclosed processes for preparing the compositions are economic, waste free, and provide said compounds in quantitative yields. The compositions can optionally be blended with hydrophilic solvents (e.g., alcohols, glycol, polyols) for non-aqueous applications. Alternatively, the compositions may be blended with an aqueous phase for direct use in aqueous applications.

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent to those described herein can be used in practice or testing of the present invention. The materials, methods, and examples disclosed herein are illustrative only and not intended to be limiting.

The terms "comprise(s)," "include(s)," "having," "has," "can," "contain(s)," and variants thereof, as used herein, are intended to be open-ended transitional phrases, terms, or words that do not preclude the possibility of additional acts or structures. The singular forms "a," "and" and "the" include plural references unless the context clearly dictates otherwise. The present disclosure also contemplates other embodiments "comprising," "consisting of' and "consisting essentially of," the embodiments or elements presented herein, whether explicitly set forth or not.

The term "sweetening," as used herein, may refer to a process that removes sulfur species from a gas or liquid. The sulfur species may include hydrogen sulfide and mercaptans.

The term "sour gas," as used herein, may refer to a gas that includes significant amounts of sulfur species, such as hydrogen sulfide and/or mercaptans.

The term "sour liquid" or "sour fluid," as used herein, may refer to a liquid that includes significant amounts of sulfur species, such as hydrogen sulfide and/or mercaptans.

The term "water cut," as used herein, means the percentage of water in a composition containing an oil and water mixture.

Useful compounds that can be used in the compositions include scavengers of sulfur-based species such as hydrogen sulfide and mercaptans. The compositions may be particularly useful in the oil, gas, and coal industries. The compositions may also be useful in the oral hygiene area.

In some embodiments, useful compositions are nanoparticles made by absorbance of a metal (Fe²⁺ or Zn²⁺) onto a silica or alumina particle.

The sulfide scavenging nanoparticles include a colloidal nanoparticle substrate. The substrate may be silica or alumina. The substrate is coated with a sulfide-reacting metal selected from Fe²⁺ and Zn²⁺. The nanoparticles have a particle size range of from 5-250 nm.

In some embodiments, the sulfide-reacting metal is Fe²⁺. In some embodiments, the sulfide-reacting metal is Zn²⁺.

A method of preparing sulfide scavenging nanoparticles, is disclosed. A metallic salt selected from Fe²⁺ and Zn²⁺ salts is added and/or mixed with an aqueous solution. Colloidal nanoparticles made of silica or alumina are cationically deionized. Solution containing the nanoparticles is passed though a column having cationic resin. The deionized colloidal nanoparticles are added to the aqueous solution. The aqueous mixture containing metallic salt and colloidal nanoparticles is added, followed by increasing the pH of the aqueous solution to between 10 and 12 over a time interval of less than 1 hour using potassium hydroxide, and removing sulfide scavenging nanoparticles from the solution..

Thus, the technique includes allowing the colloidal silica (or alumina) and Zn²⁺ salt (or Fe²⁺) to remain in contact for sufficient time to coat the desired amount of zinc (or iron) upon the silica (or alumina) nanoparticles to produce a stable substantially zinc-coated silica (or alumina) sol having a pH ranging from 10 to 12. The mode of addition of reagents is considered immaterial, although for convenience sake, it is usually preferable to add the silica (or alumina) sol to an agitated source of zinc (or iron) salt. Upon addition of the two reactants, an immediate milky solution with low pH (~3.5) forms. A pH adjustment should be implemented through quick addition of KOH until pH is between about 10 and about 12. Slow addition of KOH may result in the formation of gel in the neutral pH region (6-9). No gelation or even minute amounts of precipitation material are noted after the final product was obtained.

In some embodiments, the metallic salt is added to the aqueous solution prior to adding the colloidal nanoparticles. The metallic salt is selected from Fe²⁺ and Zn²⁺ salts. In some embodiments, the metallic salt is a Zn²⁺ salt. In some embodiments, the metallic salt is selected from zinc nitrate, zinc sulfate, zinc phosphate, zinc nitrite, zinc sulfite, zinc phosphite, zinc hydrogen sulfate, zinc carbonate, zinc azide, zinc hypochlorite, zinc permanganate, zinc hydroxide, zinc chlorite, zinc oxalate, zinc chromate, zinc chlorate, zinc acetate, zinc dichromate, zinc perchlorate, zinc peroxide, and zinc cyanide.

The pH of the aqueous solution is increased to between about 10 and about 12. The pH of the aqueous solution is increased using potassium hydroxide. The pH of the aqueous solution is increased over a time interval of less than about 1 hour.

In some embodiments, the method of preparing the nanoparticle includes agitating the aqueous mixture containing metallic salt and the nanoparticles for 1 hour.

In some embodiments, the colloidal nanoparticles consist of silica coated with Fe²⁺ and Zn²⁺. In some embodiments, the colloidal nanoparticles consist of alumina coated with Fe²⁺ or Zn²⁺.

The sulfide scavenging nanoparticles are removed from the solution.

Not according to the invention, a method of sweetening water contaminated with sulfide, includes providing the sulfide scavenging nanoparticle described above and contacting the sulfide scavenging nanoparticle with sour water, wherein the sulfide scavenging nanoparticle reacts with sulfide in the sour water resulting in a sulfide bearing nanoparticle.

Optionally, the method further includes removing the sulfide bearing nanoparticle. Optionally, removal of the sulfide bearing nanoparticle is carried out by settling out the nanoparticles.

"Produced water" is defined as the water associated with oil and gas as it is brought to the surface. Often this water is sour, meaning it contains high concentrations of sulfur compounds, most notably H₂S, which is toxic at levels > 10ppm. With the compositions not according to the invention described above, treatment of those waters with the Zn-coated Silica sols to reduce the H₂S to acceptable levels. Additionally a second step involves sequestration on to the solid and subsequent removal of the H₂S from the system, using traditional solid liquid separation techniques (both chemical and mechanical). Typical H₂S scavengers like triazines and aldehydes form soluble compounds that will stay with either the water or the oil depending on the substrate used.

The compositions not according to the invention may contain a sulfate, sulfate salt, thiosulfate, thiosulfate salt, or any combination thereof. In some embodiments, the thiosulfate may be sodium thiosulfate pentahydrate.

The compositions can optionally include one or more additives. Suitable additives include, but are not limited to, asphaltene inhibitors, paraffin inhibitors, corrosion inhibitors, scale inhibitors, emulsifiers, water clarifiers, dispersants, emulsion breakers, gas hydrate inhibitors, biocides, pH modifiers, surfactants, solvents, and combinations thereof.

Suitable asphaltene inhibitors include, but are not limited to, aliphatic sulphonic acids; alkyl aryl sulphonic acids; aryl sulfonates; lignosulfonates; alkylphenol/aldehyde resins and similar sulfonated resins; polyolefin esters; polyolefin imides; polyolefin esters with alkyl, alkylenephenyl or alkylenepyridyl functional groups; polyolefin amides; polyolefin amides with alkyl, alkylenephenyl or alkylenepyridyl functional groups; polyolefin imides with alkyl, alkylenephenyl or alkylenepyridyl functional groups; alkenyl/vinyl pyrrolidone copolymers; graft polymers of polyolefins with maleic anhydride or vinyl imidazole; hyperbranched polyester amides; polyalkoxylated asphaltenes, amphoteric fatty acids, salts of alkyl succinates, sorbitan monooleate, polyisobutylene succinic anhydride, and combinations thereof.

Suitable paraffin inhibitors include, but are not limited to, paraffin crystal modifiers, and dispersant/crystal modifier combinations. Suitable paraffin crystal modifiers include, but are not limited to, alkyl acrylate copolymers, alkyl acrylate vinylpyridine copolymers, ethylene vinyl acetate copolymers, maleic anhydride ester copolymers, branched polyethylenes, naphthalene, anthracene, microcrystalline wax and/or asphaltenes, and combinations thereof.

Suitable corrosion inhibitors include, but are not limited to, amidoamines, quaternary amines, amides, phosphate esters, and combinations thereof.

Suitable scale inhibitors include, but are not limited to, phosphates, phosphate esters, phosphoric acids, phosphonates, phosphonic acids, polyacrylamides, salts of acrylamido-methyl propane sulfonate/acrylic acid copolymer (AMPS/AA), phosphinated maleic copolymer (PHOS/MA), salts of a polymaleic acid/acrylic acid/acrylamido-methyl propane sulfonate terpolymer (PMA/AMPS), and combinations thereof.

Suitable emulsifiers include, but are not limited to, salts of carboxylic acids, products of acylation reactions between carboxylic acids or carboxylic anhydrides and amines, alkyl, acyl and amide derivatives of saccharides (alkyl-saccharide emulsifiers), and combinations thereof.

Suitable water clarifiers include, but are not limited to, inorganic metal salts such as alum, aluminum chloride, and aluminum chlorohydrate, or organic polymers such as acrylic acid based polymers, acrylamide based polymers, polymerized amines, alkanolamines, thiocarbamates, cationic polymers such as diallyldimethylammonium chloride(DADMAC), and combinations thereof.

Suitable dispersants include, but are not limited to, aliphatic phosphonic acids with 2-50 carbons, such as hydroxyethyl diphosphonic acid, and aminoalkyl phosphonic acids, e.g. polyaminomethylene phosphonates with 2-10 N atoms e.g. each bearing at least one methylene phosphonic acid group; examples of the latter are ethylenediamine tetra(methylene phosphonate), diethylenetriamine penta(methylene phosphonate) and the triamine- and tetramine-polymethylene phosphonates with 2-4 methylene groups between each N atom, at least 2 of the numbers of methylene groups in each phosphonate being different. Other suitable dispersants include lignin or derivatives of lignin such as lignosulfonate and naphthalene sulfonic acid and derivatives, and combinations thereof. Suitable dispersants also include dodecyl benzene sulfonate, oxyalkylated alkylphenols, oxyalkylated alkylpnenolic resins, and combinations thereof.

Suitable emulsion breakers include, but are not limited to, dodecylbenzylsulfonic acid (DDBSA), the sodium salt of xylenesulfonic acid (NAXSA), epoxylated and propoxylated compounds, anionic cationic and nonionic surfactants, resins such as phenolic and epoxide resins, and combinations thereof.

Suitable gas hydrate inhibitors include, but are not limited to, thermodynamic hydrate inhibitors (THI), kinetic hydrate inhibitors (KHI), anti-agglomerates (AA), and combinations thereof. Suitable thermodynamic hydrate inhibitors include, but are not limited to, NaCl salt, KCl salt, CaCl₂ salt, MgCl₂ salt, NaBr₂ salt, formate brines (e.g. potassium formate), polyols (such as glucose, sucrose, fructose, maltose, lactose, gluconate, monoethylene glycol, diethylene glycol, triethylene glycol, mono-propylene glycol, dipropylene glycol, tripropylene glycols, tetrapropylene glycol, monobutylene glycol, dibutylene glycol, tributylene glycol, glycerol, diglycerol, triglycerol, and sugar alcohols (e.g. sorbitol, mannitol)), methanol, propanol, ethanol, glycol ethers (such as diethyleneglycol monomethylether, ethyleneglycol monobutylether), alkyl or cyclic esters of alcohols (such as ethyl lactate, butyl lactate, methylethyl benzoate), and combinations thereof.

Suitable kinetic hydrate inhibitors and anti-agglomerates include, but are not limited to, polymers and copolymers, polysaccharides (such as hydroxyethylcellulose (HEC), carboxymethylcellulose (CMC), starch, starch derivatives, and xanthan), lactams (such as polyvinylcaprolactam, polyvinyl lactam), pyrrolidones (such as polyvinyl pyrrolidone of various molecular weights), surfactants (such as fatty acid salts, ethoxylated alcohols, propoxylated alcohols, sorbitan esters, ethoxylated sorbitan esters, polyglycerol esters of fatty acids, alkyl glucosides, alkyl polyglucosides, alkyl sulfates, alkyl sulfonates, alkyl ester sulfonates, alkyl aromatic sulfonates, alkyl betaine, alkyl amido betaines), hydrocarbon based dispersants (such as lignosulfonates, iminodisuccinates, polyaspartates), amino acids, proteins, and combinations thereof.

Suitable biocides include, but are not limited to, oxidizing and non-oxidizing biocides. Suitable non-oxidizing biocides include, for example, aldehydes (e.g., formaldehyde, glutaraldehyde, and acrolein), amine-type compounds (e.g., quaternary amine compounds and cocodiamine), halogenated compounds (e.g., bronopol and 2-2-dibromo-3-nitrilopropionamide (DBNPA)), sulfur compounds (e.g., isothiazolone, carbamates, and metronidazole), quaternary phosphonium salts (e.g., tetrakis(hydroxymethyl)phosphonium sulfate (THPS)), and combinations thereof. Suitable oxidizing biocides include, for example, sodium hypochlorite, trichloroisocyanuric acids, dichloroisocyanuric acid, calcium hypochlorite, lithium hypochlorite, chlorinated hydantoins, stabilized sodium hypobromite, activated sodium bromide, brominated hydantoins, chlorine dioxide, ozone, peroxides, and combinations thereof.

Suitable pH modifiers include, but are not limited to, alkali hydroxides, alkali carbonates, alkali bicarbonates, alkaline earth metal hydroxides, alkaline earth metal carbonates, alkaline earth metal bicarbonates and mixtures or combinations thereof. Exemplary pH modifiers include NaOH, KOH, Ca(OH)₂, CaO, Na₂CO₃, KHCO₃, K₂CO₃, NaHCO₃, MgO, and Mg(OH)₂.

Suitable surfactants include, but are not limited to, anionic surfactants, cationic surfactants, nonionic surfactants, and combinations thereof. Anionic surfactants include alkyl aryl sulfonates, olefin sulfonates, paraffin sulfonates, alcohol sulfates, alcohol ether sulfates, alkyl carboxylates and alkyl ether carboxylates, and alkyl and ethoxylated alkyl phosphate esters, and mono and dialkyl sulfosuccinates and sulfosuccinamates, and combinations thereof. Cationic surfactants include alkyl trimethyl quaternary ammonium salts, alkyl dimethyl benzyl quaternary ammonium salts, dialkyl dimethyl quaternary ammonium salts, imidazolinium salts, and combinations thereof. Nonionic surfactants include alcohol alkoxylates, alkylphenol alkoxylates, block copolymers of ethylene, propylene and butylene oxides, alkyl dimethyl amine oxides, alkyl-bis(2-hydroxyethyl) amine oxides, alkyl amidopropyl dimethyl amine oxides, alkylamidopropyl-bis(2-hydroxyethyl) amine oxides, alkyl polyglucosides, polyalkoxylated glycerides, sorbitan esters and polyalkoxylated sorbitan esters, and alkoyl polyethylene glycol esters and diesters, and combinations thereof. Also included are betaines and sultanes, amphoteric surfactants such as alkyl amphoacetates and amphodiacetates, alkyl amphopropripionates and amphodipropionates, alkyliminodiproprionate, and combinations thereof.

In certain embodiments, the surfactant may be a quaternary ammonium compound, an amine oxide, an ionic or non-ionic surfactant, or any combination thereof. Suitable quaternary amine compounds include, but are not limited to, alkyl benzyl ammonium chloride, benzyl cocoalkyl(C₁₂-C₁₈)dimethylammonium chloride, dicocoalkyl (C₁₂-C₁₈)dimethylammonium chloride, ditallow dimethylammonium chloride, di(hydrogenated tallow alkyl)dimethyl quaternary ammonium methyl chloride, methyl bis(2-hydroxyethyl cocoalkyl(C₁₂-C₁₈) quaternary ammonium chloride, dimethyl(2-ethyl) tallow ammonium methyl sulfate, n-dodecylbenzyldimethylammonium chloride, n-octadecylbenzyldimethyl ammonium chloride, n-dodecyltrimethylammonium sulfate, soya alkyltrimethylammonium chloride, and hydrogenated tallow alkyl (2-ethylhyexyl) dimethyl quaternary ammonium methyl sulfate.

Suitable solvents include, but are not limited to, water, isopropanol, methanol, ethanol, 2-ethylhexanol, heavy aromatic naphtha, toluene, ethylene glycol, ethylene glycol monobutyl ether (EGMBE), propylene glycol monomethyl ether, diethylene glycol monoethyl ether, xylene, and combinations thereof. Representative polar solvents suitable for formulation with the composition include water, brine, seawater, alcohols (including straight chain or branched aliphatic such as methanol, ethanol, propanol, isopropanol, butanol, 2-ethylhexanol, hexanol, octanol, decanol, 2-butoxyethanol, etc.), glycols and derivatives (ethylene glycol, 1,2-propylene glycol, 1,3-propylene glycol, ethylene glycol monobutyl ether, etc.), ketones (cyclohexanone, diisobutylketone, methyl isobutyl ketone), N-methylpyrrolidinone (NMP), N,N-dimethylformamide and the like.

Representative of non-polar solvents suitable for formulation with the composition include aliphatics such as pentane, hexane, cyclohexane, methylcyclohexane, heptane, decane, dodecane, diesel, and the like; aromatics such as toluene, xylene, heavy aromatic naphtha, fatty acid derivatives (acids, esters, amides), and the like.

Optionally, the solvent is a polyhydroxylated solvent, a polyether, an alcohol, or a combination thereof.

Optionally, the solvent is monoethyleneglycol, methanol, dimethyl sulfoxide (DMSO), dimethylformamide (DMF), tetrahydrofuran (THF), or a combination thereof.

Optionally, a composition comprises from 0 to about 80 percent by weight of one or more solvents, based on the weight of the composition. In certain embodiments, a composition comprises from 0 to about 50 percent by weight of one or more solvents, based on the weight of the composition. In certain embodiments, a composition comprises 20%, 25%, 30%, 35%, 40%, 45%, 50%, 55%, 60%, or 70% by weight of one or more solvents, based on the weight of the composition.

Compositions not according to the invention made according to the disclosure may further include additional functional agents or additives that provide a beneficial property. Additional agents or additives will vary according to the particular scavenging composition being manufactured and it's intend use as one skilled in the art will appreciate.

Optionally, the scavenging compositions do not contain any of the additional agents or additives.

The compositions and methods of manufacture and use can be better understood in connection with the following examples.

### EXAMPLES

The foregoing may be better understood by reference to the following examples, which are presented for purposes of illustration and are not intended to limit the scope of the invention. The compositions used in the examples and referred to in the drawing figures are defined as follows:

| | |
|---|---|
| LN4619-107-3-B (comparative) | About 125g of 4290 DI; about 15g of Zn, pH = about 12.9 |
| | |
| LN4619-16 (comparative) | About 1000g of 1034 DI; about 20g of Zn; pH = about 3.4 |
| | |
| LN4619-87-1 (comparative) | About 250g of DVSTS028; about 5g of Zn; pH= about 6 |
| | |
| LN4619-102 (comparative) | About 250g of 4290 DI; 10g of Zn; pH=5.3 |
| | |
| LN4619-104-1 (comparative) | About 125g of 2327 DI; about 2.5g of ZnSO4; pH = about 3.3 |
| | |
| LN4619-104-1-A (comparative) | About 125g of 2327 DI; about 2.5g of ZnSO4; pH = about 6 |
| | |
| LN4619-104-1-B | About 125g of 2327 DI; about 2.5g of ZnSO4; pH = about 11 |
| | |
| LN4619-104-1-C (comparative) | About 125g of 2327 DI; about 2.5g of ZnSO4; pH = about 12.5 |

| | |
|---|---|
| 2327 | Colloidal silica PS = about 20 nm |
| DVSTS028 | Colloidal silica PS= about 17 nm; LMS |
| 1034 | Colloidal silica PS= about 20 nm; Acidic Sol (low pH) |
| 4290 | Colloidal silica PS= about 16-26 nm |

| | |
|---|---|
| PS= particle size LMS= Low Metal Sol (high purity silica sol) | |

Testing was conducted by first making a stock solution of Na₂S in water followed by diluting stock solution for testing. Aqueous H₂S concentration of the diluted solution was determined using the Hach Methylene Blue Test for S⁻² (illustrated reaction below).

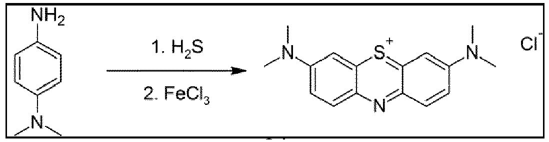

In the examples described below (not according to the invention), a metallic salt is added to and mixed with an aqueous solution. Colloidal nanoparticles of silica (4290 silica sol, Nalco Naperville, IL) were cationically deionized, separated, and added to an aqueous solution where the pH is adjusted using potassium hydroxide to a pH value of about 13.0.

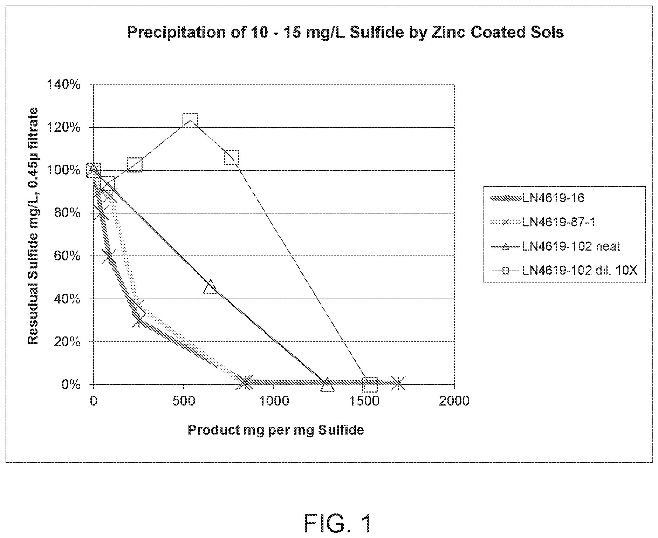

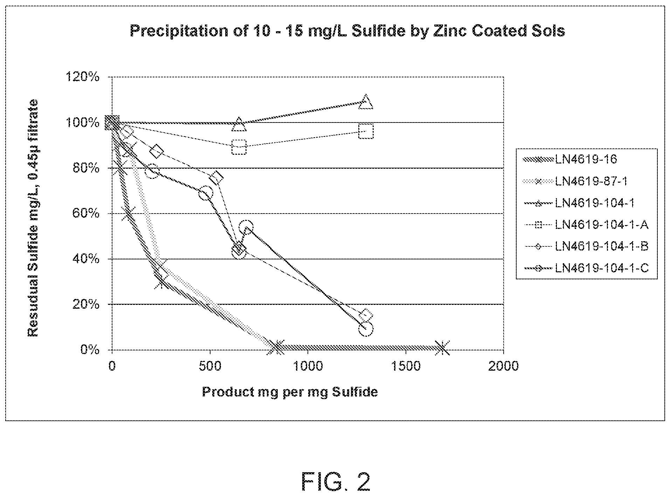

Products were dosed to aqueous samples containing 15-25 ppm of H₂S. The solution was stirred and the resultant solids were filtered. The resulting solid free solutions were measured for hydrogen sulfide concentration. Figures 1 and 2 as well as Table 1 show scavenging activity as a function of dosage using prepared nanoparticles.

**Table 1.**

| LN4619-16 | | | | |
|---|---|---|---|---|
| dosed mL | mg/L | S-2 mg/L | percent | ppm LN/S-2 |
| 0 | 0 | 11.85 | 100% | 0 |
| 0.05 | 500 | 9.50 | 80% | 42 |
| 0.1 | 1000 | 7.09 | 60% | 84 |
| 0.3 | 3000 | 3.55 | 30% | 253 |
| 1 | 10000 | 0.15 | 1% | 844 |
| 2 | 20000 | 0.10 | 1% | 1688 |

| LN4619-87-1 | | | | |
|---|---|---|---|---|
| dosed mL | mg/L | S-2 mg/L | percent | ppm LN/S-2 |
| 0 | 0 | 12.1 | 100% | 0 |
| 0.04 | 444 | 10.9 | 90% | 37 |
| 0.11 | 1110 | 10.7 | 88% | 92 |
| 0.3 | 3000 | 4.5 | 37% | 248 |
| 1 | 10000 | 0.1 | 1% | 826 |

### Head Space Analysis

H₂S being a gas, can migrate out of the water phase and into the air. The effectiveness of various nanoparticles were tested for vapor phase removal in the following manner. A stock solution containing H₂S was made according to the procedure described above. The hydrogen sulfide charged water was put into a sealed jar and shaken vigorously. The lid was then cracked and the headspace sampled with a Draeger tube (for H₂S). Next the nanoparticles were added to the solution and the process repeated. Results of head space sulfide concentrations using various nanoparticles are summarized in Table 2 using a 200 mL sample size.

**Table 2.**

| **Treatment** | **Dosage (ml)** | **Draeger Reading** |
|---|---|---|
| Blank | 0 | >>15 ppm |
| Blank | 0 | >>15 ppm |
| LN4619-107-3-B | 2 | ~0.6 ppm |
| LN4619-107-3-B | 6 | <0.5 ppm |

Using the disclosed composition ensures uninterrupted operation of scavenging process units, for example contact towers, without the need to shut down the unit to remove solid deposits.

Any ranges given either in absolute terms or in approximate terms are intended to encompass both, and any definitions used herein are intended to be clarifying and not limiting. Notwithstanding that the numerical ranges and parameters setting forth the broad scope are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all subranges (including all fractional and whole values) subsumed therein.

All of the compositions and methods disclosed and claimed herein can be made and executed without undue experimentation in light of the present disclosure. While this invention may be embodied in many different forms, there are described in detail herein specific preferred embodiments of the invention. In addition, unless expressly stated to the contrary, use of the term "a" is intended to include "at least one" or "one or more." For example, "a device" is intended to include "at least one device" or "one or more devices."

## Claims

1. A method of preparing a sulfide scavenging nanoparticle, comprising:
adding a metallic salt selected from Fe²⁺ and Zn²⁺ salts to an aqueous solution;
cationically deionizing colloidal nanoparticles consisting of silica or alumina;
adding the deionized colloidal nanoparticles to the aqueous solution;
agitating the aqueous mixture containing metallic salt and colloidal nanoparticles,
increasing the pH of the aqueous solution to between 10 and 12 over a time interval of less than 1 hour using potassium hydroxide,
removing sulfide scavenging nanoparticles from the solution.

2. The method of claim 1, wherein the metallic salt is added to the aqueous solution prior to adding the colloidal nanoparticles.

3. The method of any one of claims 1 to 2, wherein the metallic salt is a Zn²⁺ salt.

4. The method of any one of claims 1 to 3, wherein the metallic salt is selected from zinc nitrate, zinc sulfate, zinc phosphate, zinc nitrite, zinc sulfite, zinc phosphite, zinc hydrogen sulfate, zinc carbonate, zinc azide, zinc hypochlorite, zinc permanganate, zinc hydroxide, zinc chlorite, zinc oxalate, zinc chromate, zinc chlorate, zinc acetate, zinc dichromate, zinc perchlorate, zinc peroxide, and zinc cyanide.

5. The method of any one of claims 1 to 4, further comprising agitating the aqueous mixture containing metallic salt and the nanoparticles for 1 hour.

6. The method of any one of claims 1 to 5, wherein the colloidal nanoparticles consist of silica coated with Fe²⁺ and Zn²⁺.

7. The method of any one of claims 1 to 5, wherein the colloidal nanoparticles consist of alumina coated with Fe²⁺ or Zn²⁺.

## Patentansprüche

1. Verfahren zum Herstellen eines Sulfid abfangenden Nanopartikels, das Folgendes umfasst:
Zugeben eines Metallsalzes, das aus Fe²⁺ und Zn²⁺-Salzen ausgewählt ist, zu einer wässrigen Lösung;
kationisches Entionisieren kolloidaler Nanopartikel, die aus Siliciumdioxid oder Aluminiumoxid bestehen;
Zugeben der entionisierten kolloidalen Nanopartikel zu der wässrigen Lösung;
Umrühren der wässrigen Mischung, die Metallsalz und kolloidale Nanopartikel enthält,
Erhöhen des pH-Wertes der wässrigen Lösung auf zwischen 10 und 12 über einen Zeitraum von weniger als 1 Stunde unter Verwendung von Kaliumhydroxid,
Entfernen von Sulfid abfangenden Nanopartikeln aus der Lösung.

2. Verfahren nach Anspruch 1, wobei das Metallsalz zu der wässrigen Lösung vor dem Zugeben der kolloidalen Nanopartikel zugegeben wird.

3. Verfahren nach einem der Ansprüche 1 bis 2, wobei das Metallsalz ein Zn²⁺-Salz ist.

4. Verfahren nach einem der Ansprüche 1 bis 3, wobei das Metallsalz aus Folgenden ausgewählt ist: Zinknitrat, Zinksulfat, Zinkphosphat, Zinknitrit, Zinksulfit, Zinkphosphit, Zinkhydrogensulfat, Zinkcarbonat, Zinkazid, Zinkhypochlorit, Zinkpermanganat, Zinkhydroxid, Zinkchlorit, Zinkoxalat, Zinkchromat, Zinkchlorat, Zinkacetat, Zinkdichromat, Zinkperchlorat, Zinkperoxid und Zinkcyanid.

5. Verfahren nach einem der Ansprüche 1 bis 4, das ferner das Umrühren der wässrigen Mischung, die das Metallsalz und die Nanopartikel enthält, für 1 Stunde umfasst.

6. Verfahren nach einem der Ansprüche 1 bis 5, wobei die kolloidalen Nanopartikel aus einem Silciumdioxid bestehen, das mit Fe²⁺ und Zn²⁺ beschichtet ist.

7. Verfahren nach einem der Ansprüche 1 bis 5, wobei die kolloidalen Nanopartikel aus Aluminiumoxid bestehen, das mit Fe²⁺ oder Zn²⁺ beschichtet ist.

## Revendications

1. Procédé de préparation d'une nanoparticule de piégeage de sulfure, comprenant :
l'ajout d'un sel métallique choisi parmi les sels de Fe²⁺ et de Zn²⁺ à une solution aqueuse ;
la désionisation cationique de nanoparticules colloïdales constituées de silice ou d'alumine ;
l'ajout des nanoparticules colloïdales désionisées à la solution aqueuse ;
l'agitation du mélange aqueux contenant du sel métallique et des nanoparticules colloïdales,
l'augmentation du pH de la solution aqueuse entre 10 et 12 sur un intervalle de temps inférieur à 1 heure à l'aide d'hydoxyde de potassium,
l'élimination des nanoparticules de piégeage de sulfure de la solution.

2. Procédé selon la revendication 1, dans lequel le sel métallique est ajouté à la solution aqueuse avant d'ajouter les nanoparticules colloïdales.

3. Procédé selon l'une quelconque des revendications 1 à 2, dans lequel le sel métallique est un sel de Zn²⁺.

4. Procédé selon l'une quelconque des revendications 1 à 3, dans lequel le sel métallique est choisi parmi le nitrate de zinc, le sulfate de zinc, le phosphate de zinc, le nitrite de zinc, le sulfite de zinc, le phosphite de zinc, l'hydrogénosulfate de zinc, le carbonate de zinc, l'azoture de zinc, l'hypochlorite de zinc, le permanganate de zinc, l'hydroxyde de zinc, le chlorite de zinc, l'oxalate de zinc, le chromate de zinc, le chlorate de zinc, l'acétate de zinc, le dichromate de zinc, le perchlorate de zinc, le peroxyde de zinc et le cyanure de zinc.

5. Procédé selon l'une quelconque des revendications 1 à 4, comprenant en outre l'agitation du mélange aqueux contenant le sel métallique et les nanoparticules pendant 1 heure.

6. Procédé selon l'une quelconque des revendications 1 à 5, dans lequel les nanoparticules colloïdales sont constituées de silice revêtue de Fe²⁺ et de Zn²⁺.

7. Procédé selon l'une quelconque des revendications 1 à 5, dans lequel les nanoparticules colloïdales sont constituées d'alumine revêtue de Fe²⁺ ou de Zn²⁺.
